# EUROPEAN PATENT APPLICATION

(11) **EP 0 597 615 A1**
(43) Date of publication of application: **18.05.1994**
(21) Application number: 93308721.5
(22) Date of filing: 01.11.1993
(51) Int. Cl.: F16J 15/34

(54) **Mechanical seal**

(30) Priority: 13.11.1992 JP 327612/92
(71) Applicant: EAGLE INDUSTRY Co., Ltd., Tokyo (JP)
(72) Inventor: Kiryu, Kenji, c/o Okayama Factory of Eagle, Okayama-ken (JP); Okada, Ken, c/o Okayama Factory of Eagle, Okayama-ken (JP); Matsumoto, Sotosuke, c/o Okayama Factory of Eagle, Okayama-ken (JP)
(74) Representative: Kensett, John Hinton

(57) **Abstract**

A mechanical seal is provided with a stationary side sliding ring (52) air-tightly mounted on a housing (1), a rotary side sliding ring (56) air-tightly mounted around an outer periphery of a rotary shaft (2) and brought into intimate and sliding contact with an end face of the stationary side sliding ring. A metal plated film layer (57) is formed over a substantially full circumferential surface of the rotary side sliding ring exposed in a liquid to be sealed.

## Description

The present invention relates to a mechanical seal for hermetically sealing a peripheral gap around a rotary shaft of equipment such as a pump or the like.

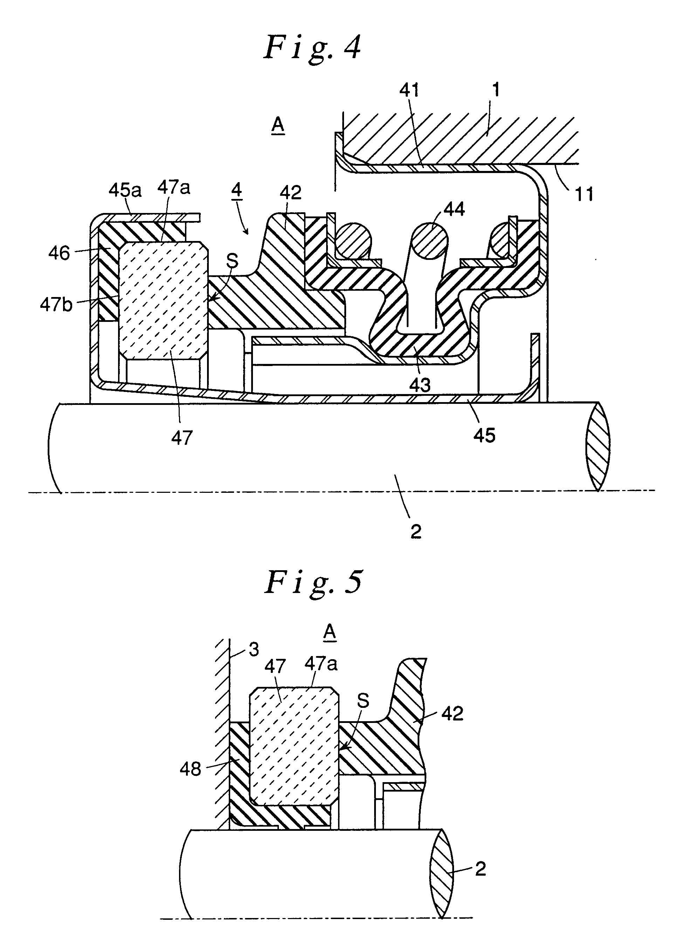

For instance, a typical example of a conventional mechanical seal for hermetically sealing a shaft periphery of a pump for recirculating a cooling water to an automotive engine is shown in Figure 4 which has a housing 1 for a shaft seal portion of a cooling water pump and a rotary shaft 2 inserted into an axial hole 11 of the housing 1 for rotating an impeller around its axis.

A mechanical seal generally indicated by reference numeral 4 includes, as a part group on the stationary side, an annular case 41 which is hermetically inserted into an opening of the axial hole 11 of the housing 1, a stationary side sliding ring 42 which is supported in an opening portion of the case 41 to be axially movable but prevented from rotating, an elastomer bellows 43 for maintaining a sealed condition between the stationary side sliding ring 42 and the case 41, and a coil spring 44 for biasing in the axial direction to urge the sliding ring 42 away from the case 41. On the other hand, a rotary side part group of the mechanical seal 4 includes a sleeve 45 attached around the rotary shaft 2 under the condition that the sleeve 45 is inserted into an interior of the case 41, an elastomer gasket 46 attached to an inner surface of a flanged receiver portion 45a formed at one end of the sleeve 45, and a rotary side sliding ring 47 which fits in the elastomer gasket 46 and faces, in the axial direction, the stationary side sliding ring 42. The confronting end faces of the stationary and rotary sliding rings 42 and 47 are brought into intimate contact with each other by the biasing force of the coil spring 44 to form a hermetically seal sliding surface S. An engine cooling water A, to be sealed, filled in a pump chamber provided around the sliding rings is prevented from leaking from between the axial hole 11 and the rotary shaft 2 to a bearing (not shown).

In such a mechanical seal 4, the cup-shaped elastomer gasket 46 which comes into intimate contact with an outer circumferential surface 47a and a bottom surface 47b of the rotary side sliding ring 47 is arranged so as to considerably reduce a contact area of the rotary side sliding ring 47 with the engine cooling water A therearound, and a thermal conductive efficiency of the elastomer gasket 46 is extremely low. Accordingly, it would be difficult to satisfactorily cool the rotary side sliding ring 47 with the cooling water A. As a result, the seal sliding surface S is likely to be heated to a high temperature, which would degrade the lubricating property to further induce abnormal heats so that an abnormal wear of the seal sliding surface S would be caused and the elastomer gasket 46 would be degraded to deteriorate the sealability at an early stage.

In order to avoid this, as shown in Figure 5, the rotary side sliding ring 47 is mounted on the outer circumferential surface of the rotary shaft 2 through an elastomer gasket 48 which is brought into intimate contact with the rotary shaft 2 at its inner circumferential surface and at the same time brought into contact with the boss portion of the impeller 3 on its back surface. The outer circumferential surface 47a and its adjacent portion of the rotary side sliding ring 47 are completely exposed in the engine cooling water A. With such an arrangement, it would be possible to enhance the cooling efficiency of the rotary side sliding ring 47.

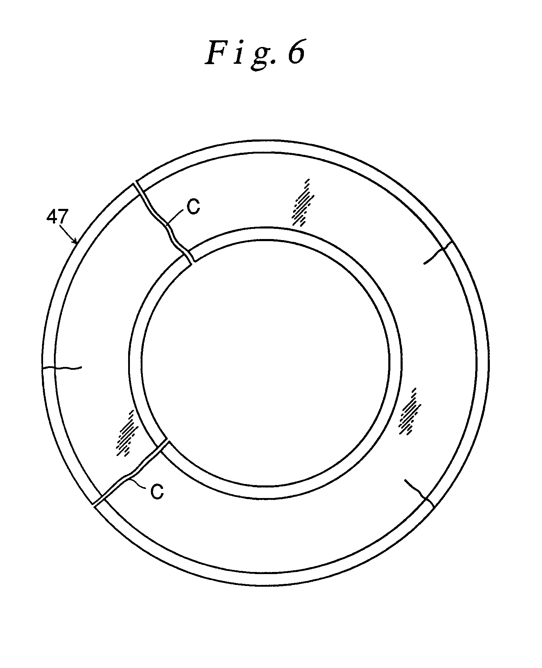

However, in the case where the mechanism is driven under the high load condition or the poor lubrication condition, the rotary side sliding ring 47 would be subjected to a remarkable strain due to a temperature gradient between the portion adjacent to the seal sliding surface S which is a source for generating heats and the portion adjacent to the outer circumferential surface 47a to be cooled by the engine cooling water A. As a result, there would be a fear that, as shown in Figure 6, cracks extending from the outer circumferential surface 47a would be caused on the rotary side sliding ring 47 made of frangil materials such as ceramics etc. The cracks would be further developed due to the expansion pressure of the water which has invaded thereinto. Then, if the cracks C which transverse in the radial direction of the rotary side sliding ring 47 would be caused at two or more positions, the part between the cracks C would fly away due to the centrifugal force, resulting in the complete elimination of the seal surface at this part. As a result, a large amount of the engine cooling water A would flow out, which would impart a fatal damage to peripheral equipment such as a pump on which the mechanical seal 4 is mounted. Accordingly, it is impossible to make the heat-radiating arrangement for the mechanical seal 4 as shown in Figure 4.

In view of the above-noted defects, an object of the present invention is to provide a mechanical seal in which damage due to cracks of the rotary side sliding ring is reduced or prevented and at the same time, the heat radiation performance is enhanced.

According to the present invention, a mechanical seal has a metal plated film layer over a full circumference of a surface of a rotary side sliding ring which is exposed in a liquid to be sealed.

It is preferable that a like metal plated film layer be formed also on a stationary side sliding ring in the same way.

Since in the rotary side sliding ring, a full outer surface formed with the metal plated film layer is brought into contact with a liquid to be sealed, the rotary side sliding ring is effectively cooled to thereby prevent an excessive heat caused by a friction heat generated in the seal sliding surface. Even if any cracks extending radially transversely in the rotary side sliding ring would be caused due to heat at two or more positions, the metal plated film layer for bundling the outer surface prevents the splash of crack pieces caused by the centrifugal force. Also, there is a fear that such cracks would be caused in the stationary side sliding ring, but a like metal plated film layer may be formed on the stationary side sliding ring to thereby prevent the explosion of the crack pieces.

Embodiments of the invention will now be described, by way of example only, with reference to the accompanying drawings, in which;

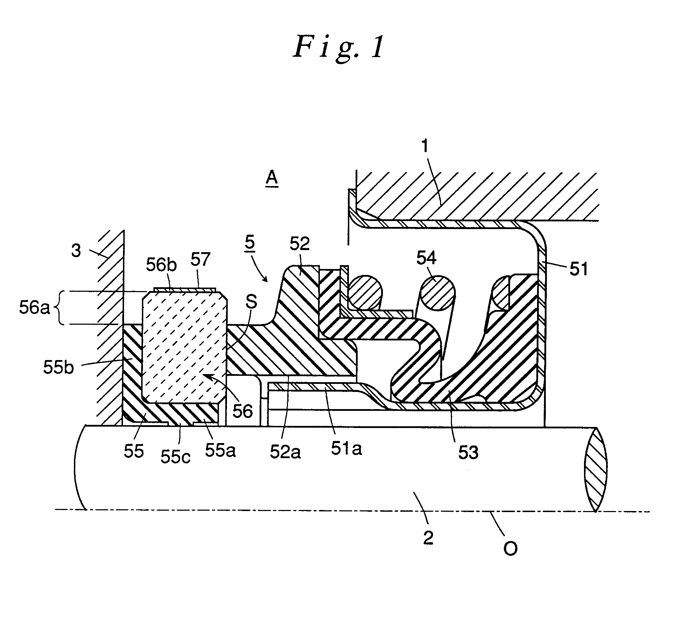

Figure 1, is a half cross-sectional view showing a relationship between a mechanical seal to which an embodiment of the present invention pertains and equipment on which the mechanical seal is mounted;
Figure 2 is a fragmentary perspective view showing a part of a rotary side sliding ring in accordance with the embodiment of the invention;
Figure 3 is a fragmentary perspective view showing a part of a rotary side sliding ring in accordance with another embodiment of the invention;
Figure 4 is a half cross-sectional view showing a relationship between a mechanical seal to which a conventional example pertains and equipment on which the mechanical seal is mounted;
Figure 5 is a half cross-sectional view showing a relationship between a mechanical seal to which another conventional example pertains and equipment on which the mechanical seal is mounted; and
Figure 6 is an illustration showing a state of cracks caused in the rotary side sliding ring of the conventional mechanical seal.

The present invention will now be described by way of example with reference to the accompanying drawings. Reference numeral 1 denotes a housing for a shaft seal portion of an engine cooling water pump. Reference numeral 2 denotes a rotary shaft for rotating an impeller 3. Reference numeral 5 denotes a mechanical seal to which the present invention pertains.

The mechanical seal 5 includes, as a stationary side part group, an annular case 51 hermetically engaged with an opening portion of an axial hole 11 of the housing 1, a stationary side sliding ring 52 supported at the opening portion of the case 51, an elastomer bellows 53 brought at both ends into intimate contact with the stationary side sliding ring 52 and the case 51 and which are extendable in the axial direction, and a coil spring 54 for biasing in the axial direction to urge the sliding ring 52 out of the case 51. A projection 51 a bent radially outwardly and extending in the axial direction is formed in an inner circumferential sleeve portion of the case 51. A cutaway portion 52a extending in the axial direction is formed in the inner circumferential surface of the stationary side sliding ring 52. The engagement of the components 51 a with 52a causes the stationary side sliding ring 52 to move in the axial direction but prevented from rotating. On the other hand, the rotary side part group includes an elastomer gasket 55, and a rotary side sliding ring 56 which is mounted on the outer periphery of the rotary shaft 2 and supported on its back surface by the impeller 3 through the gasket 55 and faces the stationary side sliding ring 52 in the axial direction. The non-rotatable stationary side sliding ring 52 is brought, by the spring force of the coil spring 54, into contact with a confronting end face of the rotary side sliding ring 56 to be rotated together with rotary shaft 2 and impeller 3 to thereby form a hermetical sliding surface S to prevent the engine cooling water A therearound from leaking.

The elastomer gasket 55 has an inner sleeve portion 55a and a radially outwardly extending flanged portion 55b. Namely, the elastomer gasket 55 has an L-shaped cross section taken along a phantom plane passing through a centerline O. The inner sleeve portion 55a is interposed between the outer circumferential surface of the rotary shaft 2 and the inner circumferential surface of the stationary side sliding ring 56, whereas the radially outwardly extending flanged portion 55b is interposed between the boss portion of the impeller 3 and the back surface of the rotary side sliding ring 56. It is preferable that a continuous projection 55c be provided in the circumferential direction to locally increase an area of parts to be deformed to enhance the sealability and a pressure contact force.

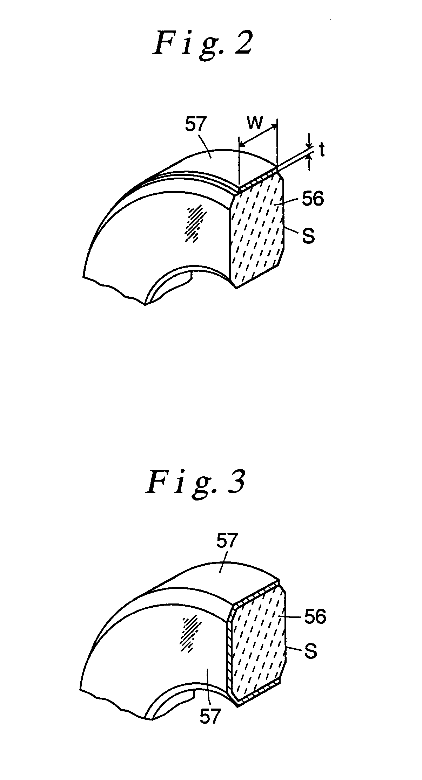

The rotary side sliding ring 56 is made of hard materials in comparison with the stationary side sliding ring 52, i.e., ceramics such as SiC. An outer circumferential side portion 56a of the sliding ring 56 exposed in the engine cooling water A which is to be sealed in the pump chamber while exceeding the outer edge of the radially outwardly extending portion 55b of the gasket 55 and the outer edge of the seal sliding surface S. A thin metal plated film layer 57 is formed over a full circumference of the outer surface 56b of the sliding ring 56 in the form of a ribbon by electrolytic deposition as shown in Figure 2.

The centrifugal force to be applied to the rotary side sliding ring 56 changes depending upon a mass determined by a material and dimensions such as an inner diameter and outer diameter of the rotary side sliding ring 56 and an RPM of the rotary shaft. A film thickness t or a film width w of the metal plated film layer 57 are suitably selected in view of these parameters so as to ensure such a tension strength that the splash of the radially transversal cracks in the rotary side sliding ring 56 may be prevented and the crack pieces may be restricted. According to the simulation made by the inventors, it is found that a sufficient strength may be obtained with a film thickness of several hundreds of microns.

Also, as shown in Figure 3, it is possible to form the metal plated film layer 57 over the entire surface of the rotary side sliding ring 56 other than the seal sliding surface S. In this case, when the cracks are caused, it is possible to prevent the slight leakage through the cracks and at the same time to further enhance the handing effect for preventing the splash of the crack pieces. According to the foregoing embodiment, since the outer circumferential portion 56a of the rotary side sliding ring 56 is brought into contact with the engine cooling water A and the thin metal plated film layer 57 formed on the surface will not suppress the thermal conductivity, the rotary side sliding ring 56 is effectively cooled by the cooling water A to thereby prevent the excessive heating caused by the friction of the seal sliding surface S. Even if a heat crack is caused in the rotary side sliding ring 56 which is made of fragile material, i.e., ceramics such as SiC, since the crack pieces would be bundled by the metal plated film layer 57, it is possible to prevent the splash of the pieces caused by the centrifugal force. It is possible to apply a metal ring or the like to the outer circumferential surface 56b of the rotary side sliding ring 56. However, in this case, due to the fastening force of the metal ring, a strain is generated in the seal sliding surface S of the rotary side sliding ring 56. As a result, the sealability would be degraded, or there is a fear that a local crack is caused during the mounting operation. In contrast, in case of the metal plated film layer 57, since the film layer 57 is formed on a surface of the rotary side sliding ring 56 by deposition in a plating bath of a metal electrolyte, there is no stress that has been discussed above.

By the way, in the case where the stationary side sliding ring 52 is made of fragile material such as carbon, there is a fear that a crack would be caused due to heat. Since the sliding ring 52 is not rotated, there is no fear that the crack piece is splashed by the centrifugal force. However, since the caused crack further open wider due to vibration or pressure or is exploded by gravity, a large amount of the cooling water would leak. It is therefore preferable to apply the metal plated film layer 57 over all the surface of the stationary sliding ring 52 other than the seal sliding surface S in the same manner as rotary side sliding ring 56.

As has been apparent from the above, according to the present invention, since the rotary side sliding ring is effectively cooled by the liquid to be sealed, it is possible to prevent the insufficient lubrication of the seal sliding surface caused by the excessive heat and to prevent the abnormal wear caused by the insufficient lubrication to thereby prolong a service life of the mechanical seal. Even if the sliding ring would have thermal cracks, it is possible to prevent the splash of the crack pieces by the metal plated film layer formed on the outer surface. It is therefore possible to prevent any leakage of a large amount of liquid caused by the elimination of the seal sliding surface.

## Claims

1. A mechanical seal including a stationary side sliding ring (52) hermetically mounted on a housing (1), a rotary side sliding ring (56) hermetically mounted around an outer periphery of a rotary shaft (2) and brought into intimate and sliding contact with an end face of said stationary side sliding ring, characterised in that a metal plated film layer (57) is formed over a substantially full circumferential surface of said rotary side sliding ring exposed in a liquid to be sealed.

2. The mechanical seal according to Claim 1, wherein a metal plated film layer is formed over a full outer circumferential surface, brought into contact with the liquid to be sealed, of said stationary side sliding ring.

3. The mechanical seal according to Claim 1, further comprising an elastomer gasket (55) interposed between said rotary shaft and said rotary side sliding ring to seal an outer circumferential portion of said rotary side sliding ring.

4. The mechanical seal according to Claim 3, wherein a projection (55c) extending circumferentially is formed on said elastomer gasket.
